# EUROPEAN PATENT APPLICATION

(11) **EP 4 827 216 A1**
(43) Date of publication of application: **21.10.2026**
(21) Application number: 23961524.8
(22) Date of filing: 15.12.2023
(51) Int. Cl.: H04W 72/232, H04W 16/28, H04W 56/00, H04W 72/0457, H04W 74/0838

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/045048
(87) International publication number: WO 2025/126461

(57) **Abstract**

A terminal according to an aspect of the present disclosure includes: a receiving section that receives a parameter enabling two timing advances (TA) in single downlink control information (DCI)-based inter-cell beam management (ICBM), and a physical random access channel (PRACH)-related indicator field in a physical downlink control channel order triggering a PRACH; and a control section that determines enabling of two TAs in the DCI-based ICBM based on the parameter, in which the control section determines a cell to be triggered of a PRACH based on the PRACH-related indicator field in a case where the two TAs are enabled.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (Registered Trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 or later) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future radio communications system, it is considered that a downlink single transmission/reception point (DL sTRP)/uplink multi transmission/reception point (UL mTRP) scenario is applied. It is considered that two Timing Advance (TA)/Timing Advance Group (TAG) are instructed in this case.

However, control of UL transmission when two TA/TAGs are instructed is unclear. Therefore, there is a possibility that the UE is not able to appropriately control the timing of the UL transmission.

Therefore, an object of the present disclosure is to provide a terminal, a radio communication method, and a base station capable of appropriately controlling timing of UL transmission.

### Solution to Problem

A terminal according to an aspect of the present disclosure includes: a receiving section that receives a parameter enabling two timing advances (TA) in single downlink control information (DCI)-based inter-cell beam management (ICBM), and a physical random access channel (PRACH)-related indicator field in a physical downlink control channel order triggering a PRACH; and a control section that determines enabling of two TAs in the DCI-based ICBM based on the parameter, in which the control section determines a cell to be triggered of a PRACH based on the PRACH-related indicator field in a case where the two TAs are enabled.

### Advantageous Effects of Invention

According to one aspect of the present disclosure, timing of UL transmission can be appropriately controlled.

### Brief Description of Drawings

[FIG. 1] Fig. 1A is a diagram illustrating a deployment example of general transmission/reception points. Fig. 1B is a diagram illustrating a UL high-density deployment example.
[FIG. 2] Fig. 2 is a diagram illustrating an example of DL/UL coverage of a heterogeneous network (HetNet).
[FIG. 3] Fig. 3 is a diagram illustrating a configuration example of a TAG for a cell.
[FIG. 4] Figs. 4A and 4B are diagrams illustrating an example of a MAC CE for a timing advance command.
[FIG. 5] Fig. 5 is a diagram illustrating an example of a schematic configuration of a radio communication system according to one embodiment.
[FIG. 6] Fig. 6 is a diagram illustrating an example of a configuration of a base station according to one embodiment.
[FIG. 7] Fig. 7 is a diagram illustrating an example of a configuration of a user terminal according to one embodiment.
[FIG. 8] Fig. 8 is a diagram illustrating an example of a hardware configuration of a base station and a user terminal according to one embodiment.
[FIG. 9] Fig. 9 is a diagram illustrating an example of a vehicle according to one embodiment.

### Description of Embodiments

### (Scenario 1: UL high-density deployment (UL only TRP))

In Rel. 15 NR, coverages (reach distances) of PUSCH, PUCCH, PRACH, PDSCH, PDCCH, and PBCH are not uniform. Especially at high frequencies, the coverage of the PUSCH is limited. In a future radio communication system (for example, Rel. 18, Rel. 19, or later), improvement of at least one of UL coverage and UL throughput has been studied.

In order to expand the UL coverage, it has been studied to provide UL reception points in addition to general transmission/reception points. Therefore, a deployment example of general transmission/reception points and a deployment example (UL high-density deployment) in which UL reception points are provided will be described.

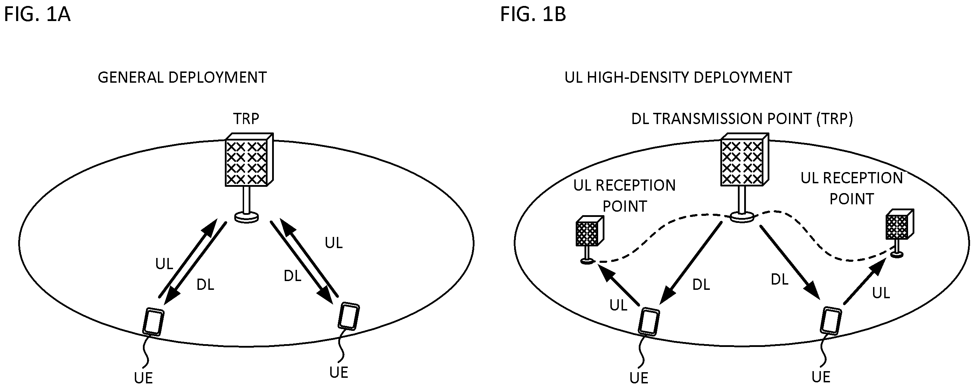

Fig. 1A is a diagram illustrating a deployment example of general transmission/reception points. In Fig. 1A, a UE receives a DL signal from a transmission/reception point (TRP) and transmits a UL signal to the TRP. For example, when the UE and the TRP are far from each other, there is a possibility that a path loss is large and the communication quality deteriorates.

Fig. 1B is a diagram illustrating a UL high-density deployment example. In order to expand UL coverage, it is considered to provide the UL reception points illustrated in Fig. 1B in addition to the TRP (DL transmission point) illustrated in Fig. 1A. In Fig. 1B, the UE receives DL signals from a DL transmission point (TRP/Central TRP/DL TRP) corresponding to the macro cell and transmits UL signals to a UL reception point (for example, a reception point with lower path loss/received power). However, the UE may also perform UL transmission to the DL transmission point.

By using the UL high-density deployment illustrated in Fig. 1B, both coverage and a UL data rate can be improved by reducing a path loss, improving UL signaling quality, and obtaining a higher coding rate compared with the general deployment illustrated in Fig. 1A. Furthermore, since the UL reception point mainly performs reception, a required function (for example, a power amplifier or the like) is reduced and cost is reduced as compared with a transmission/reception point corresponding to a general small cell, and deployment management becomes very easy.

### (Scenario 2: Decoupling of DL TRP and UL TRP in HetNet)

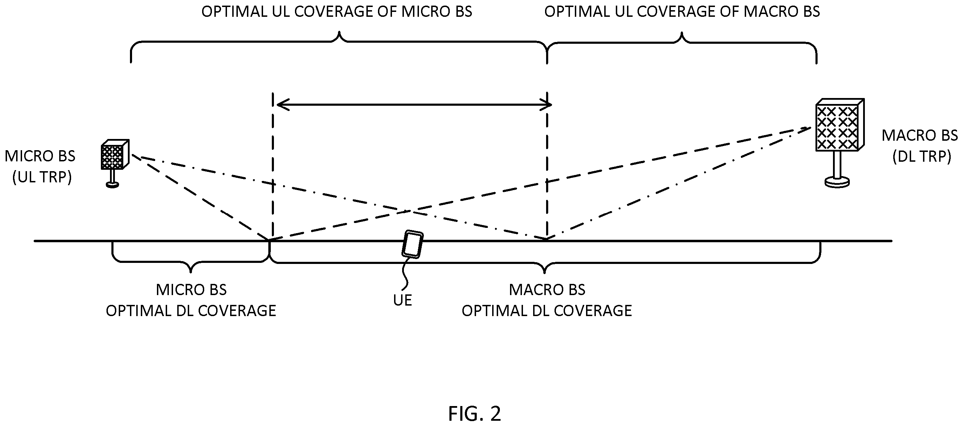

In the present disclosure, a heterogeneous network (HetNet) using a macro base station (BS) (DL TRP) and a micro BS (UL TRP) may be applied (Fig. 2). In a normal HetNet, transmit powers of a macro BS and a micro BS are different. Furthermore, the optimal DL coverage and the optimal UL coverage are different. For example, DL coverage is determined by RSRP, and UL coverage is determined by path loss (PL).

In the example of Fig. 2, the UE is included in the optimal DL coverage for the macro BS and the optimal UL coverage for the micro BS. In this case, the UE can receive the DL from the macro BS and transmit the UL to the micro BS. However, the UE may transmit some reference signals/channels (for example, SRS that is used to acquire DL CSI and the usage of which is antenna switching (AS)) to the macro BS. Therefore, there is a possibility that the UE requires two TAs in this scenario. Note that since the base station (macro BS) performs the CSI measurement for the DL (for example, determines the MIMO precoder for the DL) based on the reception of the SRS using the reciprocity of the channel, the SRS of the AS is transmitted to the macro BS. On the other hand, the SRS the usage of which is Codebook/Non-codebook is used for determining the precoder/beam of the PUSCH, and thus is transmitted to the micro BS.

In the HetNet, even if the micro BS has the DL transmission capability, the energy of the micro BS can be saved by turning off the DL most of the time. In this case, the function of the micro BS is similar to the UL only TRP (UL reception point).

### (Timing Advance)

The timing advance (TA) is used for timing adjustment of the UL. Up to the existing specification (Rel. 17), the UL frame number i for transmission from the UE starts a certain time (for example, T_{TA}) before the start of the corresponding DL frame.

The certain time may be, for example, T_{TA} = (N_{TA} + N_{TA, offset} + N^{common}_{TA, adj} + N^{UE}_{TA, adj})T_{C}. When being used in non-terrestrial network (NTN), N^{common}_{TA, adj} and N^{UE}_{TA, adj} may be zero regardless of examples of the present disclosure.

Here, N_{TA} may indicate a timing advance between DL and UL, N_{TA, offset} may indicate a fixed offset used to calculate the timing advance, N^{common}_{TA, adj} may indicate a network-controlled timing correction, N^{UE}_{TA, adj} may indicate a UE-derived timing correction, and T_{C} may indicate a basic time unit for NR.

For example, in the random access preamble transmission and the message A PUSCH transmission, N_{TA} is zero, and N_{TA, offset} is applied.

### (Timing Advance Group)

When a plurality of TRPs is used, distances between the UE and the respective TRPs may be different from each other. The plurality of TRPs may be included in the same cell (for example, the serving cell). Alternatively, among the plurality of TRPs, a certain TRP may correspond to a serving cell and another TRP may correspond to a non-serving cell. The plurality of TRPs may include DL transmission points and UL reception points. In this case, it is also assumed that the distance between each TRP and the UE is different.

In the existing system, a transmission timing of an uplink (UL) channel and/or a UL signal (UL channel/signal) is adjusted by timing advance (TA). The reception timing of UL channels/signals from different user terminals (UE) is adjusted on a radio base station (also referred to as TRP: Transmission and Reception Point, gNB: gNodeB, and the like) side.

The UE may perform timing control of the UL transmission by applying the timing advance (multiple timing advance) for each preset timing advance group (TAG).

In a case where the multiple timing advance is applied, a timing advance group (TAG) classified by transmission timing is supported. The UE may control the UL transmission timing in each TAG assuming that the same TA offset (or TA value) is applied for each TAG. That is, the TA offset may be set independently for each TAG.

In a case where the multiple timing advance is applied, the UE independently adjusts the transmission timing of the cells belonging to each TAG, so that the uplink signal reception timing from the UE can be matched in the radio base station even when a plurality of cells is used.

The TAG (for example, serving cells that belong to the same TAG) may be set by a higher layer parameter. The same timing advance value may be applied to serving cells (for example, the serving cell in which the UL is configured) that belong to the same TAG. The timing advance group including the SpCell of the MAC entity is referred to as a primary timing advance group (PTAG), and the other TAGs may be referred to as a secondary timing advance group (STAG). Furthermore, the maximum number of TAGs may be X (for example, X = 4) for each cell group (for example, MCG/SCG).

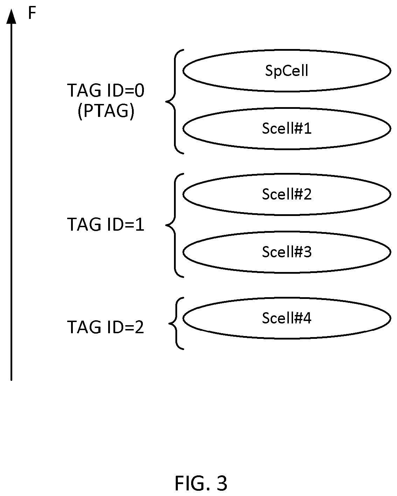

In the existing system (for example, Rel. 16 NR), a configuration of up to four TAGs is supported for each cell group (for example, MCG/SCG) (see Fig. 3). Fig. 3 illustrates a case where three TAGs are configured for a cell group including SpCell and SCells #1 to #4. Here, a case where the SpCell and the SCell#1 belong to the first TAG (PTAG or TAG#0), the SCell#2 and the SCell#3 belong to the second TAG (TAG#1), and the SCell#4 belongs to the third TAG (TAG#2) is illustrated.

A timing advance command (TA command) may be notified to the UE by utilizing a MAC control element (for example, the MAC CE). The TA command is a command indicating an uplink channel transmission timing value and is included in the MAC control element. The TA command (TAC) is signaled at the MAC layer from the radio base station to the UE. The UE controls a given timer (for example, a TA timer) based on the reception of the TA command.

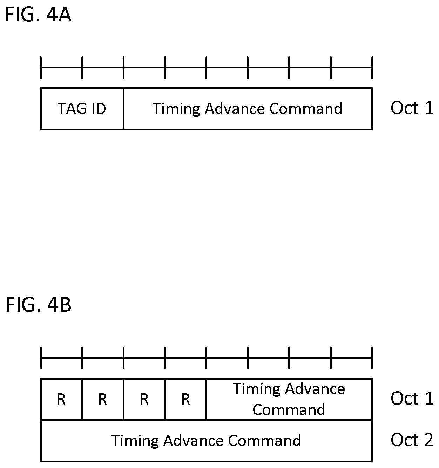

The MAC CE for the timing advance command may include a field for a timing advance group index (for example, the TAG ID) and a field for a timing advance command (see Fig. 4A). The MAC CE may be configured with 1 octet (= 8 bits).

The field of the TAG ID (TAG ID field) may be configured with, for example, 2 bits. The TAG ID field may be used to indicate the TAG ID of the addressed TAG. The field (TAC field) of the timing advance command may be configured with, for example, 6 bits. The TAC field may indicate the index value T_{A} (0, 1, 2 ... 63) used to control the amount/value (relative amount/relative value) of timing adjustments that the MAC entity must apply. The MAC CE for the timing advance command illustrated in Fig. 4A may be referred to as a TAC MAC CE.

Fig. 4B is a diagram illustrating another example of the MAC CE for the timing advance command. The MAC CE illustrated in Fig. 4B may be referred to as an absolute TAC MAC CE. The MAC CE may be configured with 2 octets (= 16 bits). Specifically, the MAC CE may include a field for a reserved bit (R bit field) and a field for a timing advance command (TAC field). The R bit field (R = 0) may be configured with, for example, 4 bits. The TAC field may be configured with, for example, 12 bits over 2 octets. Similarly to Fig. 4A, the TAC field in Fig. 4B may indicate the index value used to control the actual amount/value (absolute amount/absolute value) of TA that the MAC entity must apply. Furthermore, the absolute TAC MAC CE does not need to include the TAG ID field illustrated in Fig. 4A.

The MAC CE illustrated in Fig. 4A may be used after initial access is established. On the other hand, the MAC CE illustrated in Fig. 4B is used only at the time of initial access, and may include an RAR or the like. Each field included in the MAC CE for the timing advance command described above may be referred to as a field related to TA. Among the fields, the TAC field illustrated in Fig. 4A may be referred to as a TA adjustment field/a field for instructing TA adjustment/a field related to TA adjustment, and the TAC field illustrated in Fig. 4B may be referred to as an absolute TAC field/a field for instructing an absolute TAC.

A parameter corresponding to each TAG ID may be set with a higher layer parameter. For example, a parameter such as a time alignment timer (for example, timeAlignmentTimer) corresponding to each TAG ID may be set. Alternatively, the TAG ID may be set for each serving cell with a higher layer parameter (for example, tag-ID included in ServingCellConfig). Note that the TAG ID/parameter may be updated by the MAC CE after being set with the higher layer parameter.

The time alignment timer may be maintained for UL time alignment. In Rel. 17, the time alignment timer may be set/associated for each TAG. When receiving a MAC CE(for example, TAC MAC CE) for a timing advance command, the UE starts or restarts the time alignment timer respectively associated with the indicated timing advance group (for example, TAG).

In a case where the MAC entity receives a TAC MAC CE and a given value (N_{TA}) is maintained with the indicated TAG, the MAC entity applies a timing advance command for the indicated TAG or starts or restarts a time alignment timer associated with the indicated TAG. The given value (N_{TA}) may be a timing advance between DL and UL.

The operation when the time alignment timer expires may be separately defined in the PTAG and the STAG. Note that the timing advance group (TAG) including the SpCell of the MAC entity may be referred to as a primary timing advance group (PTAG), and the other TAGs may be referred to as a secondary timing advance group (STAG).

For example, in Rel. 17, it is supported that a given operation for PTAG is applied when the timing advanced timer corresponding to the PTAG expires, and a given operation for STAG is applied when the timing advance timer corresponding to the STAG expires.

For example, when the time alignment timer expires, the following operation (for example, given operation for PTAG/given operation for STAG) may be performed.

### [Given Operation for PTAG]

When the time alignment timer is associated with the PTAG,
- Flush all HARQ buffers of all serving cells.
- If set, notify the RRC to release the PUCCH for all the serving cells.
- If set, notify the RRC to release the SRS.
- Clear all set DL assignments and set UL assignments.
- Clear the PUSCH resource for semi-persistent CSI reporting.
- Expire all time alignment timers during running.
- N_{TA} of all TAGs is maintained.

### [Given Operation for STAG]

When the time alignment timer is associated with the STAG, for all serving cells belonging to the TAG,
- Flush all HARQ buffers.
- If set, notify the RRC to release the PUCCH.
- If set, notify the RRC to release the SRS.
- Clear all the set DL assignments and UL assignments.
- Clear the PUSCH resource for semi-persistent CSI reporting.
- The N_{TA} of the TAG is maintained.

### (PRACH-related indicator in Rel. 18)

The PRACH-related indicator includes 0 or 1 bit.

The PRACH-related indicator is 1 bit if the following condition is satisfied.
- If the UE is provided with certain parameters (tag-Id2 and SSB-MTC-AddtionalPCI),
- If the UE is not provided with the coresetPoolIndex or is provided with the coresetPoolIndex (value = 0) for the first CORESET,
- If coresetPoolIndex (value = 1) for the second CORESET is provided.

If the UE is provided with a certain parameter SSB-MTC-AddtionalPCI, the field of the PRACH-related indicator (hereinafter, simply referred to as a field) configured with 1 bit indicates the PCI associated with the PRACH transmission.

Specifically, the index 0 of the field is mapped to (associated with) the PCI of the serving cell. The index 1 of the field is mapped to the PCI of the active additional cell.

On the other hand, if the UE is not provided with a certain parameter SSB-MTC-AddtionalPCI, the field indicates a PL-RS (path loss reference signal) for the PRACH transmission.

Specifically, the index 0 of the field is mapped to a DL RS in which a DM-RS of the PDCCH order is quasi-collocated. The index 1 of the field is mapped to the SS/PBCH indicated by the SS/PBCH index field in this DCI format (1_0).

If none of the above conditions are satisfied (otherwise), the PRACH-related indicator is 0 bit.

### (Reference Signal Power in PRACH Transmission in Rel. 18)

If at least one of the following conditions is satisfied, the UE is provided with the parameter referenceSignalPower related to reference signal power by the corresponding parameter ss-PBCH-BlockPower.

When the PRACH transmission from the UE is a response to detection of PDCCH order by the UE triggering a contention-free random access procedure and the DM-RS of the PDCCH order depends on the QCLed DL RS, and if the following at least one condition is satisfied:
- if there is no PRACH-related indicator in the PDCCH order,
- if there is no cell indicator field in the PDCCH order, or a value of the field is 0,
- if a value of a PRACH-related indicator field in the PDCCH order is 0 when the UE is not provided with SSB-MTC-AdditionalPCI,
- if the PRACH-related indicator field in the PDCCH order indicates a physical cell ID (physCellId) related to the cell receiving the PDCCH order or depends on the indicated SS/PBCH block,
- if the PRACH transmission is transmitted in the non-serving cell indicated by the cell indicator field in the PDCCH order,
- if a value of a PRACH-related indicator field in the PDCCH order is 1 when the UE is not provided with SSB-MTC-AdditionalPCI,
- if the PRACH-related indicator field in the PDCCH order indicates a different physical cell ID (physCellId) from the physCellId related to the cell receiving the PDCCH order.

### (Analysis)

It is considered that a DL sTRP/UL mTRP scenario is applied in a future radio communication system. In this case, it is considered that two TA/TAGs are indicated.

For example, in a further extension of the asymmetric DL sTRP/UL mTRP deployment scenario, an intra-band/intra-cell non-co-located multi-TRP is assumed, and a unified TCI framework for multi-TRPs targeting FR1 and FR2 is assumed. In this case, it is not necessary to change a definition for an existing cell or a definition for a new cell (for example, a cell of only UL).

In the extension, for example, when the path loss RS is transmitted from the DL sTRP, for path loss calculation toward the UL TRP, it is necessary to clarify two closed loop power control adjustment states (both are independent from the PUSCH) for the SRS or setting of the path loss offset.

Two TAs in the asymmetric DL sTRP/UL mTRP deployment scenario need to be supported in the following framework, for example:
- Multi-DCI-based intra-cell/inter-cell multi-TRP framework.
- Single DCI-based intra-cell multi-TRP framework.
- Single DCI-based inter-cell beam management (ICBM) framework.

### <Problem 1>

For example, in a case where two TAs are supported in a single DCI-based intra-cell multi-TRP, a field of a PRACH-related indicator of DCI (for example, DCI format 1_0) needs to be extended.

For example, in the existing specification, for a PRACH triggered by a PDCCH order, a field of a PRACH-related indicator in the PDCCH order indicates that a PL-RS of a corresponding PRACH transmission is a QCL-RS of the PDCCH order or an SSB indicated in the PDCCH order.

Specifically, when a certain parameter SSB-MTC-AddtionalPCI is provided for the UE, the field of the PRACH-related indicator indicates the PCI associated with the PRACH transmission. On the other hand, when no certain parameter SSB-MTC-AddtionalPCI is provided for the UE, the field of the PRACH-related indicator indicates the PL-RS for the PRACH transmission.

Since the above-described existing specification is content for the multi-DCI-based intra-cell multi-TRP, it is necessary to extend the content for the single DCI.

### <Problem 2>

Furthermore, even in a case where two TAs are supported in single DCI-based inter-cell beam management (ICBM), further extension such as UL timing adjustment is required.

### <Problem 3>

Furthermore, in two TAs for multi-DCI-based intra-cell/inter-cell multi-TRPs in Rel. 18, the UE does not expect the TCI state (UL TCI state) associated with one coresetPoolIndex to correspond to two TAGs.

The above-described constraints also need further extensions to support for single DCI (ICBM).

### <Problem 4>

As discussed above, in the multi-DCI-based intra-cell multi-TRPs in Rel. 18, a PRACH-related indicator indicates whether a PRACH (transmission) is associated with a PCI of a serving cell or is associated with an active additional cell (additional PCI).

Here, in the multi-DCI-based intra-cell multi-TRP, up to one additional active cell (additional PCI) may be associated with the PRACH (transmission).

On the other hand, in single DCI-based inter-cell beam management (ICBM) after Rel. 19, it is assumed that up to seven additional active cells (additional PCIs) can be associated with PRACH (transmission).

In this case, the PRACH-related indicator needs to be further extended for single DCI-based ICBM.

As described above, in order to support two TAs in the single DCI-based intra-cell/inter-cell multi-TRP, it is necessary to further extend the existing specification (that is, control of UL transmission when two TA/TAGs are indicated).

If these are not clear, there is a possibility that the UE is not able to appropriately control the timing of the UL transmission.

Therefore, the present inventors have conceived a method capable of appropriately controlling the timing of the UL transmission.

### (Various Interpretations and the like)

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable with each other. Furthermore, in the present disclosure, "A/B/C" may mean "at least one of A, B, and C".

In the present disclosure, notification, activate, deactivate, indicate, select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, a field, an information element (IE), a setting, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be, for example, any one of Radio Resource Control (RRC) signaling, Medium Access Control (MAC) signaling, broadcast information, other messages (a message from the core network, such as, for example, a positioning protocol (for example, NR Positioning Protocol A (NRPPa)/LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeable with each other. In the present disclosure, a sequence, a list, a set, a group, a cohort, a cluster, a subset, and the like may be interchangeable with each other.

In the present disclosure, a base station, a gNB, a network (NW), an RS group, an antenna port group, and a control resource set (CORESET) group may be interchangeable with each other. In the present disclosure, a terminal, a user terminal, and user equipment (UE) may be interchangeable with each other.

In the present disclosure, an index, an identifier (ID), an indicator, a resource ID, and the like may be interchangeable with each other. In the present disclosure, a sequence, a list, a set, a group, a cohort, a cluster, a subset, and the like may be interchangeable with each other.

In the present disclosure, a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource set, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeable with each other.

In the present disclosure, the sTRP, the single TRP, a channel/signal using the single TRP, that one SRS resource set is indicated by DCI, a channel using one TCI state/spatial relation, that the multi-TRPs are not enabled by the RRC/DCI, that a plurality of TCI states/spatial relations are not enabled by RRC/DCI, and that one CORESET pool index (CORESETPoolIndex) value is not configured for any CORESET and any codepoint in the TCI field is not mapped to two TCI states may be interchangeable with each other.

In the present disclosure, the mTRP, the multi-TRPs, that two SRS resource sets are indicated by the DCI, a channel/signal using the multi-TRPs, a channel using a plurality of TCI states/spatial relations, that the multi-TRPs are enabled by the RRC/DCI, that the plurality of TCI states/spatial relations are enabled by the RRC/DCI, and at least one of multi-TRPs based on the single DCI and multi TRPs based on the multi-DCIs may be interchangeable with each other.

In the present disclosure, single DCI, sDCI, single PDCCH, multi-TRP based on single DCI, sDCI-based mTRP, that two TCI states on at least one TCI codepoint are activated, that at least one codepoint of a TCI field is mapped to two TCI states, and that a certain index (for example, a TRP index, a CORESET pool index, or an index corresponding to a TRP) is set for a certain channel/CORESET may be interchangeable with each other.

In the present disclosure, multi-DCI, mDCI, multi-PDCCH, multi-TRP based on multi-DCI, mDCI-based mTRP, that two CORESET pool indexes or CORESET pool index = 1 (or a value of 1 or more) are set, and that a plurality of certain indexes (for example, a TRP index, a CORESET pool index, or an index corresponding to a TRP) for a certain channel/CORESET is set may be interchangeable with each other.

In the present disclosure, the TRP #1 (first TRP) may correspond to the CORESET pool index = 0 or may correspond to the first TCI state of two TCI states corresponding to one codepoint of the TCI field. The TRP #2 (second TRP) and the TRP #1 (first TRP) may correspond to the CORESET pool index = 1 or may correspond to the second TCI state of two TCI states corresponding to one codepoint of the TCI field. The first TRP or the second TRP may be a DL transmission point or a UL reception point.

The UL reception point may be connected to a TRP (for example, a base station) or a core network via wire or radio. The UL reception point may be treated as a network (NW) or a base station. The UL reception point may be capable of transmitting downlink (DL) signals and may be applied to a base station forming a macro cell. For example, the UL reception point may not transmit downlink data but may transmit control signals/channels.

In the present disclosure, UL high-density deployment, a distributed TRP mode, a separated location mode of transmission/reception points, a distributed transmission/reception mode, a separated TRP mode, a TRP type 1, a TRP type 2, a TRP type A, and a TRP type B may be interchangeable with each other.

In the present disclosure, the SRS may be at least one of an aperiodic (A)-SRS, a periodic (P)-SRS, and a semi-persistent (SP)-SRS.

In the present disclosure, a path loss reference RS, a path loss reference RS for PUSCH, a path loss reference RS for PUCCH, a path loss reference RS for SRS, SSB, CSI-RS, and RS may be interchangeable with each other. In the present disclosure, a path loss (PL), a path loss value, and a path loss parameter may be interchangeable with each other.

In the present disclosure, the base station, the UL reception point, the UL TRP, the UL only TRP (UL only TRP), and the micro BS may be interchangeable with each other. The UL reception point may perform only the UL reception or may perform the DL transmission if the condition is satisfied.

In the present disclosure, the base station, the DL transmission point, the DL TRP, the DL-only TRP (DL only TRP), the macro BS, and the central TRP may be interchangeable with each other. The DL transmission point may perform only the DL transmission, or may perform the UL reception if the condition is satisfied.

In the present disclosure, TA, TAG, and TA offset values may be interchangeable with each other. The DL reference timing and the DL reception timing may be interchangeable with each other. The two TA/TAGs may be interchangeable with more than two TA/TAGs.

In the present disclosure, the coresetPoolIndex, the CORESET pool index, and the RRC parameters indicating the CORESET pool index may be interchangeable with each other. The n-TimingAdvanceOffset and the TA offset may be interchangeable with each other. The TCI-UL-State, the UL TCI state, and the RRC parameters indicating the UL TCI state may be interchangeable with each other. The dl-OrJointTCI-StateList, the list of DL or joint TCI states, and the RRC parameters indicating the list of DL or joint TCI states may be interchangeable with each other. The ul-TCI-StateList, the list of UL TCI states, and the RRC parameters indicating the list of UL TCI states may be interchangeable with each other. n-TimingAdvanceOffset and n-TimingAdvanceOffset2 may be interchangeable with a TA offset and RRC parameters indicating a TA offset.

The DL sTRP/UL mTRP may mean, for example, a scenario applied in Rel. 19. The DL sTRP/UL mTRP may be, for example, the above-described scenario 1 (Fig. 1B) or scenario 2 (Fig. 2). The asymmetric DL sTRP/UL mTRP and DL sTRP/UL mTRP may be interchangeable with each other.

### (Radio Communication Method)

Embodiments of the present disclosure can be roughly classified as follows.
- First Embodiment: Extension of PRACH-related indicators in a single DCI-based intra-cell multi-TRP.
- Second Embodiment: Extension for two TAs in single DCI-based inter-cell beam management (ICBM).
- Third Embodiment: Constraint when two TAs are supported in a single DCI-based ICBM.
- Fourth Embodiment: Extension of PRACH-related indicators in a single DCI-based ICBM.

Hereinafter, each embodiment will be described based on these.

In the present disclosure, each embodiment/each option may be applied alone, or may be applied in combination.

### <First Embodiment>

A first embodiment corresponds to Problem 1 described above, and relates to extension of a PRACH-related indicator in a single DCI-based intra-cell multi-TRP.

The PRACH-related indicator may indicate a PCI (serving cell/additional cell) associated with the PRACH transmission or a PL-RS for the PRACH transmission.

The UE may determine a cell associated with the PRACH transmission (PCI) or a PL-RS for the PRACH transmission based on the PRACH-related indicator.

More specifically, the UE may control the determination according to whether or not a certain parameter (SSB-MTC-AddtionalPCI) is provided. The UE may apply the above-described existing specification regarding the determination.

For example, the UE may apply the same (common) operation in the single DCI-based and multi-DCI-based scenarios regarding the above determination.

Alternatively, the UE may apply different operations in the single DCI-based and multi-DCI-based scenarios regarding the above determination. That is, the UE may apply the determination in any case of a single DCI-based/multi-DCI-based scenario.

### [Aspect 1-1]

In order to support two TAs in a single DCI-based intra-cell multi-TRP framework, the PRACH-related indicator in DCI format 1_0 may be 1 bit if at least one condition described below is satisfied.

That is, the UE may determine/assume the number of bits of the PRACH-related indicator based on Conditions 1 to 7 described below.

### (Condition 1)

If the UE is provided with a certain parameter (tag-Id2). The certain parameter may be a parameter indicating a timing advance group.

### (Condition 2)

If the UE is provided with a certain parameter (a new higher layer parameter). The new higher layer parameter may be, for example, a parameter that enables a plurality of (two) TAs in a certain scenario (single DCI-based intra-cell multi-TRP framework/single DCI-based inter-cell beam management framework).

### (Condition 3)

If the UE is provided with a certain parameter (a new higher layer parameter). The new higher layer parameter may be, for example, a parameter that provides setting of a path loss offset for a certain scenario (a deployment scenario of DL sTRP/UL mTRP).

### (Condition 4)

If the UE indicates/reports a certain capability (new UE capability). The UE capability may indicate support for a plurality of (two) TAs in a DL sTRP/UL mTRP deployment scenario or a plurality of (two) TAs in a single DCI-based intra-cell multi-TRP framework.

### (Condition 5)

If the UE is provided with at least one TCI codepoint indicating two TCI states.

### (Condition 6)

If the UE is configured with dl-OrJointTCI-StateList or ul-TCI-StateList and has two indicated TCI states. Condition 6 may be a condition of a single DCI-based multi-TRP in the unified TCI state. For example, Condition 6 may be interchangeable with "If the UE is provided with dl-OrJointTCI-StateList or TCI-UL-State and the first TCI-State or TCI-UL-State and the second TCI-State or TCI-UL-State are indicated.".

### (Condition 7)

If the UE is configured with dl-OrJointTCI-StateList or ul-TCI-StateList.

The UE may determine/assume the number of bits of the PRACH-related indicator based on Conditions 1 to 7.

### <Modification of Aspect 1-1>

In order to support two TAs in a single DCI-based intra-cell/inter-cell multi-TRP framework, a new field having functionality similar to the PRACH-related indicator field described above may be introduced. The new field may be referred to as a field for supporting two TAs in a single DCI-based intra-cell/inter-cell multi-TRP framework.

### (Description Example 1 of Specification)

The new field is configured with 0 or 1 bit. The new field may be 1 bit if at least one of the above-described Conditions 1 to 7 is satisfied.

The new field is configured with 0 or 1 bit.

The new field indicates the PL-RS for the PRACH transmission. The index 0 of the field is mapped to a DL RS in which a DM-RS of the PDCCH order is quasi-collocated. The index 1 of the field is mapped to the SS/PBCH indicated by the SS/PBCH index field in this DCI format (1_0).

If none of the above conditions is satisfied (otherwise), the new field is 0 bit.

### (Description Example 2 of Specification)

If at least one of the following conditions is satisfied, the UE is provided with the parameter referenceSignalPower related to reference signal power by the corresponding parameter ss-PBCH-BlockPower.

When the PRACH transmission from the UE is a response to detection of PDCCH order by the UE triggering a contention-free random access procedure and the DM-RS of the PDCCH order depends on the QCLed DL RS, and if the following at least one condition is satisfied:
- if there is no PRACH-related indicator in the PDCCH order,
- if there is no cell indicator field of the PDCCH order, or a value of the field is 0,
- if a value of a PRACH-related indicator field in the PDCCH order is 0 when the UE is not provided with SSB-MTC-AdditionalPCI,
- if the PRACH-related indicator field in the PDCCH order indicates a physical cell ID (physCellId) related to the cell receiving the PDCCH order,
- if a value of the new field in the PDCCH order is 0,
- if it depends on the indicated SS/PBCH block,
- if the PRACH transmission is transmitted in the non-serving cell indicated by the cell indicator field in the PDCCH order,
- if a value of a PRACH-related indicator field in the PDCCH order is 1 when the UE is not provided with SSB-MTC-AdditionalPCI,
- if the PRACH-related indicator field in the PDCCH order indicates a different physical cell ID (physCellId) from the physCellId related to the cell receiving the PDCCH order
- if a value of the new field in the PDCCH order is 1.

### [Aspect 1-2]

In a single DCI-based intra-cell multi-TRP framework or DL sTRP/UL mTRP deployment scenario, two TAs may not be supported.

If a single DCI-based intra-cell multi-TRP framework or DL sTRP/UL mTRP deployment scenario is configured, the UE does not need to expect at least one of the following configurations/indications/behaviors:
- A plurality of (may be two or three or more) TAGs are set for one serving cell.
- A plurality of (may be two or three or more) DL reference timings are set for one serving cell. Here, each DL reference timing may be associated with a TAG.
- A plurality of (may be two or three or more) timing advance offset values (n-TimingAdvanceOffset values) are set for each serving cell. Here, each timing advance offset value may be associated with a TAG.
- A correspondence (mapping/association) between a TAG ID and a TCI state is set.
- The TAG ID is indicated in the absolute timing advance MAC CE (absolute TAC MAC CE).
- The TAG ID is indicated in the MAC random access response (MAC RAR).
- A PDCCH order for a TRP/cell/PCI/TCI state triggers a PRACH for a TRP/cell/PCI/TCI state that is different from those in the PDCCH order.
- A PRACH-related indicator that triggers the PRACH in the PDCCH order (the PRACH-related indicator is included in the PDCCH order).
- The TAG ID is indicated in the PDCCH order.
- The TAG and SSB/CSI-RS are associated.

In Aspect 1-2, "If a single DCI-based intra-cell multi-TRP framework or DL sTRP/UL mTRP deployment scenario is configured" may mean that at least one of the following conditions is satisfied.
- If a new higher layer parameter that enables the DL sTRP/UL mTRP deployment scenario is provided to the UE.
- For the DL sTRP/UL mTRP deployment scenario, if a new higher layer parameter related to setting of a path loss offset is provided to the UE.
- If the UE is provided with at least one of the TCI codepoints indicating two TCI states and the UE is not provided with two different CORESETPoolIndexes (that is, which means single DCI-based).
- If the UE is configured with dl-OrJointTCI-StateList or ul-TCI-StateList and has two indicated TCI states, and the UE is not provided with two different CORESETPoolIndexes.
- If the UE is configured with dl-OrJointTCI-StateList or ul-TCI-StateList and the UE is not provided with two different CORESETPoolIndexes.

According to this embodiment, the UE can support two TAs in a single DCI-based intra-cell multi-TRP framework or a DL sTRP/UL mTRP deployment scenario. Furthermore, even in a case where the two TAs are not supported, the UE can appropriately control the corresponding operation according to a certain scenario.

### <Second Embodiment>

A second embodiment corresponds to Problem 2 described above and relates to an extension for two TAs in single DCI-based inter-cell beam management (ICBM).

### [Aspect 2-1]

In the single DCI-based inter-cell beam management, the following extensions may be applied to support two TAs. That is, when supporting two TAs in the single DCI-based inter-cell beam management, the UE may expect/assume at least one of the following:
- A plurality of (may be two or three or more) TAGs are set for one serving cell.
- A plurality of (may be two or three or more) DL reference timings are set for one serving cell. Here, each DL reference timing may be associated with a TAG.
- A plurality of (may be two or three or more) timing advance offset values (n-TimingAdvanceOffset values) are set for each serving cell. Here, each timing advance offset value may be associated with a TAG.

- A correspondence (mapping/association) between a TAG ID and a TCI state is set. In UL transmission, a TAG ID associated with a UL/joint TCI state may be used.
- The TAG ID is indicated in the absolute timing advance MAC CE (absolute TAC MAC CE).
- The TAG ID is indicated in the MAC random access response (MAC RAR). The timing advance command (TAC) in the MAC RAR may be applied to the indicated TAG ID.
- A PRACH configuration for each additional cell/PCI (the PCI is different from the PCI of the serving cell) is received (configured).
- A PRACH-related indicator that triggers the PRACH in the PDCCH order (the PRACH-related indicator is included in the PDCCH order). As described above, the PRACH-related indicator indicates the PCI (serving cell/additional cell) associated with the PRACH transmission. That is, the PRACH-related indicator indicates whether the PRACH transmission is associated with the serving cell or which additional cell the PRACH transmission is associated with.
- A PDCCH order for a TRP/cell/PCI/TCI state triggers a PRACH for a TRP/cell/PCI/TCI state that is different from those in the PDCCH order.
- The TAG ID is indicated in the PDCCH order.
- The TAG and SSB/CSI-RS are associated.

### [Aspect 2-2]

If at least one condition described below is satisfied, the UE may apply the content of Aspect 2-1. That is, the UE may determine/assume support for two TAs in a single DCI-based ICBM based on Conditions 1 to 4 described below.

### (Condition 1)

If the UE is provided with a certain parameter (a new higher layer parameter). The new higher layer parameter may be, for example, a parameter that enables a plurality of (two) TAs in a DL sTRP/UL mTRP deployment scenario or a single DCI-based ICBM.

### (Condition 2)

If the UE is provided with a certain parameter (a new higher layer parameter). The new higher layer parameter may be, for example, a parameter related to setting of a path loss offset for deployment scenario of DL sTRP/UL mTRP.

### (Condition 3)

If the UE indicates/reports a certain capability (new UE capability). The UE capability may indicate support for a plurality of (two) TAs in a DL sTRP/UL mTRP deployment scenario or a plurality of (two) TAs in a single DCI-based ICBM.

### (Condition 4)

If the UE is provided with certain parameters (SSB-MTC-AdditionalPCI) and is not provided with two different CORESETPoolIndex (that is, which means corresponding to a single DCI-based ICBM).

The UE may determine/assume support for two TAs in a single DCI-based ICBM based on Conditions 1 to 4.

### [Aspect 2-3]

In a single DCI-based ICBM framework or a DL sTRP/UL mTRP deployment scenario, two TAs do not need to be supported.

In a case where a single DCI-based ICBM framework or a DL sTRP/UL mTRP deployment scenario is configured, the UE does not need to expect at least one of the content (configuration/indication/behavior) of Aspect 2-1.

In Aspect 2-3, "A case where a single DCI-based ICBM framework, or DL sTRP/UL mTRP deployment scenario is configured" may mean that at least one of the following conditions is satisfied.
- If the UE is provided with certain parameters (SSB-MTC-AdditionalPCI) and is not provided with two different CORESETPoolIndex (that is, which means corresponding to a single DCI-based ICBM).
- If a new higher layer parameter that enables the DL sTRP/UL mTRP deployment scenario is provided to the UE.
- For the DL sTRP/UL mTRP deployment scenario, if a new higher layer parameter related to setting of a path loss offset is provided to the UE.

According to this embodiment, the UE may support two TAs in a single DCI-based ICBM framework or a DL sTRP/UL mTRP deployment scenario. Furthermore, even in a case where the two TAs are not supported, the UE can appropriately control the corresponding operation according to a certain scenario.

### <Third Embodiment>

A third embodiment corresponds to Problem 3 described above, and relates to a constraint in a case where two TAs are supported in a single DCI-based ICBM.

In a case where a plurality of (two) TAs are enabled in a single DCI-based ICBM or DL sTRP/UL mTRP deployment scenario, the UE does not expect the TCI states/UL TCI states associated with a certain cell/PCI to correspond to two/a plurality of TAGs.

Alternatively, according to UE capability, TCI states/UL TCI states associated with a certain cell/PCI may correspond to two/a plurality of TAGs.

In the third embodiment, "A case where a plurality of (two) TAs are enabled in single DCI-based ICBM or DL sTRP/UL mTRP deployment scenario" may mean that at least one of the following Conditions 1 to 7 is satisfied.

### (Condition 1)

If the UE is provided with a certain parameter (tag-Id2) (that is, if the UE is provided with a plurality of (two) TAGs in the serving cell).

### (Condition 2)

If the UE is provided with a second n-TimingAdvanceOffset value (that is, if the UE is provided with a plurality of (two) timing advance offset values in the serving cell).

### (Condition 3)

If the UE is provided with a correspondence (mapping/association) of TAG ID and TCI state.

### (Condition 4)

If a new higher layer parameter that enables a plurality of (two) TAs in a single DCI-based ICBM or DL sTRP/UL mTRP deployment scenario is provided to the UE.

### (Condition 5)

For a DL sTRP/UL mTRP deployment scenario, if a new higher layer parameter related to setting of a path loss offset is provided to the UE.

### (Condition 6)

If the UE indicates/reports a certain capability (new UE capability). The UE capability may indicate support for a plurality of (two) TAs in a DL sTRP/UL mTRP deployment scenario or a plurality of (two) TAs in a single DCI-based ICBM.

### (Condition 7)

If the UE is provided with certain parameters (SSB-MTC-AdditionalPCI) and is not provided with two different CORESETPoolIndex (that is, which means corresponding to a single DCI-based ICBM).

### [Modifications]

In a case where a plurality of (two) TAs are enabled in a single DCI-based ICBM or DL sTRP/UL mTRP deployment scenario, the UE does not expect TAGs of the same index to be associated with indices of a plurality of indication TCI states. That is, in this case, the UE does not expect an index of the same TAG to be associated with an index of each indication TCI state. In other words, the UE does not expect a common TAG to be associated with a plurality of indication TCI states.

For example, the UE does not expect the first indication TCI state to be associated with the first TAG (TAG#0) and the second indication TCI state to be associated with the second TAG (TAG#1).

According to this embodiment, the UE can appropriately control an operation based on a certain constraint in a case where two TAs are supported in a single DCI-based ICBM framework or a DL sTRP/UL mTRP deployment scenario.

### <Fourth Embodiment>

A fourth embodiment corresponds to Problem 4 described above and relates to the extension of PRACH-related indicators in a single DCI-based ICBM.

### [Aspect 4-1]

In a case where a plurality of (two) TAs are enabled in a single DCI-based ICBM or DL sTRP/UL mTRP deployment scenario, the UE determines a cell (additional cell/serving cell) to be triggered of the PRACH according to the following options 1 to 2.

More specifically, in the above case, the UE determines, based on the following options 1 to 2, whether the PRACH can be triggered only for an active additional cell (PCI)/serving cell, or whether the PRACH can be triggered for a configured additional cell (either an active additional cell or an inactive additional cell).

### (Option 1)

The PRACH may be triggered only for an active additional cell or a serving cell. That is, the UE may trigger the PRACH only for the active additional cell or the serving cell.

### (Option 2)

The PRACH may be triggered for a configured additional cell (either an active additional cell or an inactive additional cell). That is, the UE may trigger the PRACH for the configured additional cell (either the active additional cell or the inactive additional cell).

In the present disclosure, an active PCI (additional cell) may mean a PCI (additional cell) associated with an active TCI state.

According to this aspect, the UE can appropriately determine the cell (additional cell/serving cell) to be triggered of the PRACH.

### [Aspect 4-2]

In a case where a plurality of (two) TAs are enabled in a single DCI-based ICBM or DL sTRP/UL mTRP deployment scenario, at least one of the following options 1 to 2 may be applied as a method of indicating which cell (PCI) the PRACH transmission is associated with.

That is, the UE may determine the cell (additional cell/serving cell) associated with the PRACH transmission according to the following options 1 to 2:

### (Option 1)

A PRACH-related indicator field in the PDCCH order (DCI format 1_0) that triggers the PRACH transmission is used. That is, the UE may determine the cell (additional cell/serving cell) associated with the PRACH transmission using the PRACH-related indicator field.

### (Option 2)

A new field that is added within the PDCCH order (DCI format 1_0) that triggers the PRACH transmission is used. That is, the UE may determine the cell (additional cell/serving cell) associated with the PRACH transmission using the new field (assuming that the new field is added).

According to this aspect, the UE can appropriately determine the cell (additional cell/serving cell) associated with the PRACH transmission.

### [Aspect 4-3]

The number of bits (size) of the PRACH-related indicator field/new field in Aspect 4-2 may conform to the following Alt1 to Alt3. The UE may determine/assume the number of bits of the PRACH-related indicator/new field according to the following Alt1 to Alt3.

### (Alt1)

The number of bits may be 3 bits. According to this number of bits, up to eight PCIs (including one serving cell and seven additional cells) can be configured/enabled. That is, the number of bits may be determined based on the number of cells (serving cell and additional cell).

### (Alt2)

The number of bits may be determined based on the number of additional cells. More specifically, the number of bits may be represented by the number of bits = ceil (log₂ (Nrof_{additionalPCI}+1)). Note that, in the present disclosure, ceil (X) may mean that X is multiplied by a ceiling function. Nrof_{additionalPCI} may represent the number of additional cells (or active additional cells).

Nrof_{additionalPCI} represents the number of additional cells, and may be set by higher layer signaling (RRC) (Alt2-1).

Nrof_{additionalPCI} may represent the number of active additional cells (that is, the number of additional cells associated with the active TCI state) (Alt2-2).

According to Alt2, the number of bits can be flexibly controlled according to the number of additional cells (or active additional cells).

### [Aspect 4-4]

The mapping (association) of the codepoints of the PRACH-related indicator field/the new field in Aspect 4-2 may be according to the following Alt1 to Alt2. The UE may determine/assume a mapping (a correspondence with a cell (PCI)) of a codepoint of a PRACH-related indicator/new field according to the following Alt1 to Alt2.

### (Alt1)

One codepoint (for example, indicated by bit field index 0) may be mapped to a PCI of the serving cell. The (other) Nrof_{additionalPCI} codepoints (for example, indicated by the bit field indexes 1 to Nrof_{additionalPCI}) may be mapped to the PCI of the additional cell. The PCI of the additional cell may be set by higher layer signaling (RRC) according to a descending/ascending order of the indexes of the additional cells.

### (Alt2)

One codepoint (for example, indicated by bit field index 0) may be mapped to a PCI of the serving cell. The (other) Nrof_{additionalPCI} codepoints (for example, indicated by the bit field indexes 1 to Nrof_{additionalPCI}) may be mapped to the PCI of the active additional cell (PCI of the additional cell associated with the active TCI state) according to a descending/ascending order of the indexes of the additional cells.

According to this aspect, the UE can appropriately recognize/determine the correspondence between the codepoint of the PRACH-related indicator/new field and the cell (PCI) according to Alt1 to Alt2.

In the fourth embodiment, "A case where a plurality of (two) TAs are enabled in single DCI-based ICBM or DL sTRP/UL mTRP deployment scenario" may mean that the same condition (Conditions 1 to 7) as in the above-described third embodiment is satisfied.

### <Modifications>

In the multi-DCI-based inter-cell multi-TRP in Rel. 18, when the PRACH-related indicator field in the PDCCH order indicates the same PCI as the cell that receives the PDCCH order, the PL-RS of the PRACH transmission is (corresponds to) a quasi-collocated/QCLed DL RS in which a DM-RS of the PDCCH order is quasi-collocated.

On the other hand, when the PRACH-related indicator field in the PDCCH order indicates a PCI different from the cell that receives the PDCCH order, the PL-RS of the PRACH transmission is (corresponds to) the SSB indicated in the PDCCH order.

These correspondences may be similarly applied even in a case where a plurality of (two) TAs are enabled in a single DCI-based ICBM.

Furthermore, the "PRACH-related indicators (fields)" in the existing specification may be interchangeable with "new fields" in the present disclosure.

For example, a part of the condition that the UE is provided with the parameter referenceSignalPower related to the reference signal power as a part of a condition provided by the corresponding parameter ss-PBCH-BlockPower may be interchangeable with at least one of the following:
- If a new field in the PDCCH order indicates a physical cell ID (physCellId) related to a cell that receives the PDCCH order
- If a new field in the PDCCH order indicates a physical cell ID (physCellId) different from physCellId related to a cell that receives the PDCCH order

According to the modification, it is possible to simplify the UE implementation by effectively utilizing the existing specification.

### <Supplement>

### [Notification of Information to UE]

Notification of any information (from the network (NW)) (for example, the base station (BS)) to the UE (in other words, reception of any information from the BS by the UE) in the above-described embodiments may be performed using physical layer signaling (for example, DCI), higher layer signaling (for example, RRC signaling, a MAC CE), a certain signal/channel (for example, a PDCCH, a PDSCH, or a reference signal), or a combination thereof.

When the notification is performed by a MAC CE, the MAC CE may be identified by including, in a MAC subheader, a new logical channel ID (LCID) not defined in the existing standards.

When the notification is performed using DCI, the notification may be performed by a certain field of the DCI, a radio network temporary identifier (RNTI) used for scrambling of cyclic redundancy check (CRC) bits added to the DCI, a format of the DCI, or the like.

Furthermore, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a certain signal/channel (for example, a PUCCH, a PUSCH, a PRACH, or a reference signal), or a combination thereof.

When the notification is performed by a MAC CE, the MAC CE may be identified by including, in a MAC subheader, an LCID not defined in the existing standards.

When the notification is performed by a UCI, the notification may be transmitted using a PUCCH or PUSCH.

Furthermore, the notification of any information from the UE in the above-described embodiments may be performed periodically, semi-persistently, or aperiodically.

### [Application of Each Embodiment]

At least one of the above-described embodiments may be applied if a certain condition is satisfied. The certain condition may be defined in the standards, or may be notified to the UE/BS using higher layer signaling/physical layer signaling.

At least one of the above-described embodiments may be applied only to a UE that has reported a certain UE capability or supports the certain UE capability. Note that "to support" and "whether or not to support" may be interchangeable with each other.

The certain UE capability may indicate at least one of the following:
- Supporting certain processing/operation/control/information for at least one of the above embodiments,
- Supporting DL sTRP/UL mTRP,
- Supporting multi-DCI-based intra-cell/inter-cell multi-TRPs,
- Supporting single DCI-based intra-cell multi,
- Supporting single DCI-based inter-cell beam management (ICBM),
- Supporting two TA/TAGs,
- Number of supported TA/TAGs.

Furthermore, the certain UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each feature set (FS) or feature set per component-carrier

### (FSPC).

In addition, the certain UE capability may be capability applied across all the duplex schemes (in common irrespective of duplex scheme) or may be capability for each duplex scheme (for example, time division duplex (TDD) and frequency division duplex (FDD)).

In addition, at least one of the above-described embodiments may be applied when the UE is configured/activated/triggered with certain information related to the above-described embodiment (or to perform the operation of the above-described embodiment) by higher layer signaling/physical layer signaling. For example, the certain information may be any RRC parameter for a certain release (for example, Rel. 18/19), or the like.

The UE may apply, for example, the operation of Rel. 15/16/17 when the UE does not support at least one of the certain UE capabilities or is not configured with the certain information.

### (Supplementary Notes)

Regarding one embodiment (first embodiment) of the present disclosure, the following supplementary notes of the invention will be given.

### [Supplementary note 1]

A terminal including:
a receiving section that receives a physical random access channel (PRACH)-related indicator field in a physical downlink control channel order that triggers a PRACH; and
a control section that determines a bit size of the PRACH-related indicator field based on a certain condition in a case where two timing advances (TA) are supported in a single downlink control information (DCI)-based intra-cell multi-transmission/reception point (TRP).

### [Supplementary note 2]

The terminal according to supplementary note 1, in which
the certain condition is that at least one of a parameter indicating a timing advance group, a parameter enabling a plurality of TAs in a certain scenario, and setting of a path loss offset for the certain scenario is provided.

### [Supplementary note 3]

The terminal according to supplementary note 1 or 2, in which
the certain condition is at least one of receiving a transmission configuration indication (TCI) codepoint indicating two TCI states, having two indicated TCI states, and receiving a configuration related to a unified TCI state.

### [Supplementary note 4]

The terminal according to any one of supplementary notes 1 to 3, in which
the control section does not expect that at least one of a plurality of timing advance groups (TAG), a plurality of downlink (DL) reference timings, and a timing advance offset value is set for a serving cell in a case where two timing advances (TA) are not supported in the single downlink control information (DCI)-based intra-cell multi-transmission/reception point (TRP).

### (Supplementary Notes)

Regarding one embodiment (second embodiment) of the present disclosure, the following supplementary notes of the invention will be given.

### [Supplementary note 1]

A terminal including:
a receiving section that receives certain parameters related to support of two timing advances (TA) in single downlink control information (DCI)-based inter-cell beam management (ICBM); and
a control section that determines support of two TAs in the DCI-based ICBM based on the certain parameter.

### [Supplementary note 2]

The terminal according to supplementary note 1, in which
the certain parameter is at least one of a parameter that enables support of two TAs in the DCI-based ICBM, a parameter related to setting of a path loss offset for a certain scenario, and a parameter related to an additional cell.

### [Supplementary note 3]

The terminal according to supplementary note 1 or 2, in which
the control section expects that at least one of a plurality of timing advance groups (TAG), a plurality of downlink (DL) reference timings, and a timing advance offset value is set for a serving cell in a case where two TAs are supported in the DCI-based ICBM.

### [Supplementary note 4]

The terminal according to any one of supplementary notes 1 to 3, in which
the control section does not expect that at least one of a plurality of timing advance groups (TAG), a plurality of downlink (DL) reference timings, and a timing advance offset value is set for a serving cell in a case where two TAs are supported in the DCI-based ICBM.

### (Supplementary Notes)

Regarding one embodiment (third embodiment) of the present disclosure, the following supplementary notes of the invention will be given.

### [Supplementary note 1]

A terminal including:
a receiving section that receives a parameter that enables two timing advances (TA) in single downlink control information (DCI)-based inter-cell beam management (ICBM); and
a control section that determines enabling of two TAs in the DCI-based ICBM based on the parameter, in which
the control section does not expect that a transmission configuration indication (TCI) state associated with a certain cell corresponds to two timing advance groups (TAG) in a case where the two TAs are enabled.

### [Supplementary note 2]

The terminal according to supplementary note 1, in which the enabling of the two TAs is being provided with two TAGs or two timing advance offset values in a serving cell.

### [Supplementary note 3]

The terminal according to supplementary note 1 or 2, in which the enabling of the two TAs is providing a correspondence between a TAG and a TCI state.

### [Supplementary note 4]

The terminal according to any one of supplementary notes 1 to 3, in which the enabling of the two TAs is providing a parameter related to setting of a path loss offset or a parameter related to an additional cell.

### (Supplementary Notes)

Regarding one embodiment (fourth embodiment) of the present disclosure, the following supplementary notes of the invention will be given.

### [Supplementary note 1]

A terminal including:
a receiving section that receives a parameter enabling two timing advances (TA) in single downlink control information (DCI)-based inter-cell beam management (ICBM), and a physical random access channel (PRACH)-related indicator field in a physical downlink control channel order that triggers a PRACH; and
a control section that determines enabling of two TAs in the DCI-based ICBM based on the parameter, in which
the control section determines a cell to be triggered of a PRACH based on the PRACH-related indicator field in a case where the two TAs are enabled.

### [Supplementary note 2]

The terminal according to supplementary note 1, in which
the cell to be triggered of the PRACH is at least one of a serving cell, an active additional cell, and an inactive additional cell.

### [Supplementary note 3]

The terminal according to supplementary note 1 or 2, in which
the number of bits of the PRACH-related indicator field is determined based on the number of additional cells or active additional cells.

### [Supplementary note 4]

The terminal according to any one of supplementary notes 1 to 3, in which codepoints of the PRACH-related indicator field are mapped according to ascending or descending order of indexes of additional cells.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

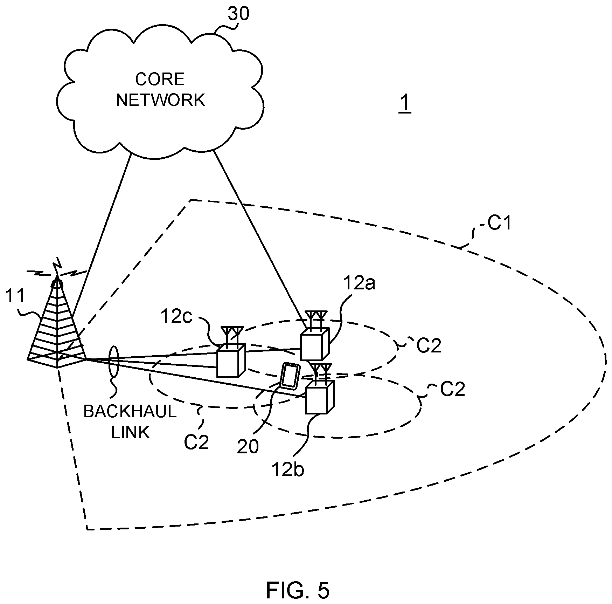

Fig. 5 is a diagram illustrating an example of a schematic configuration of a radio communication system according to one embodiment. A radio communication system 1 (simply referred to as a system 1) may be a system that implements communication using long term evolution (LTE), 5th generation mobile communication system New Radio (5G NR), and the like defined by third generation partnership project (3GPP).

Furthermore, the radio communication system 1 may support dual connectivity (multi-RAT dual connectivity (MR-DC)) between a plurality of radio access technologies (RATs). The MR-DC may include dual connectivity (E-UTRA-NR dual connectivity (EN-DC)) between LTE (evolved universal terrestrial radio access (E-UTRA)) and NR, dual connectivity (NR-E-UTRA dual connectivity (NE-DC)) between NR and LTE, and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base station 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Furthermore, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when the NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. Furthermore, communication with an external network (for example, the Internet) may be performed via the DN.

The user terminal 20 may be a terminal that compatible with at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

Furthermore, in the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be interchangeable with DL data, and the PUSCH may be interchangeable with UL data.

For detection of the PDCCH, a control resource set (CORESET) and a search space may be used. The CORESET corresponds to a resource for searching DCI. The search space corresponds to a search area and a search method for PDCCH candidates. One CORESET may be associated with one or a plurality of search spaces. UE may monitor CORESET associated with a certain search space based on a search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRSs may be referred to as "user terminal-specific reference signals (UE-specific reference signals)".

### (Base Station)

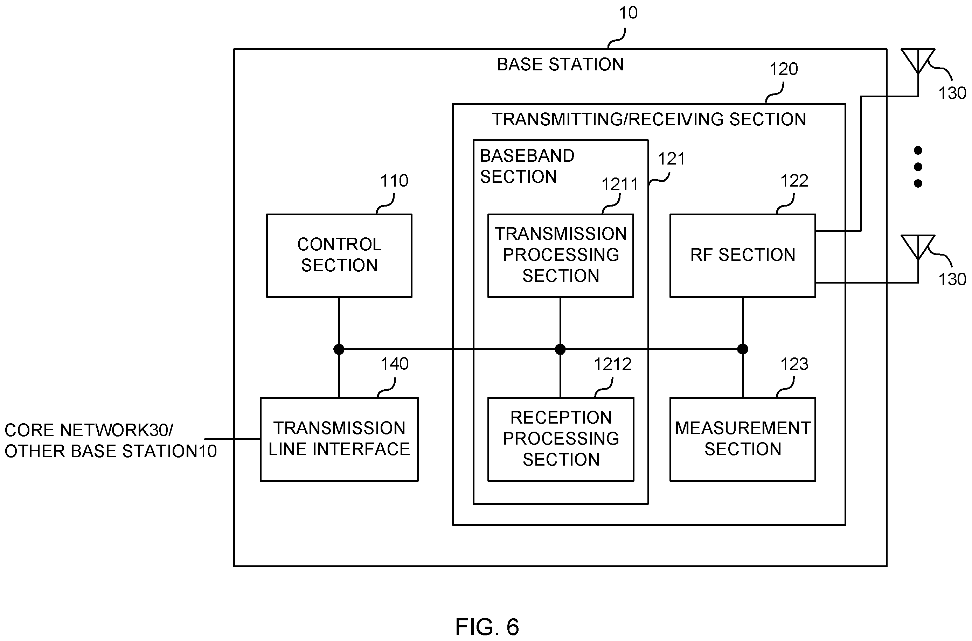

Fig. 6 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that the present example mainly describes functional blocks, which is a characteristic part of the present embodiment, and it may be assumed that the base station 10 also has another functional block necessary for radio communication. A part of the processing of each section described below may be omitted.

The control section 110 controls the entire base station 10. The control section 110 can include a controller, a control circuit, or the like, which is described based on common recognition in the technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

On the other hand, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, and the transmission line interface 140.

The transmitting/receiving section 120 may transmit the PRACH-related indicator field in a physical downlink control channel order that triggers a physical random access channel (PRACH). In a case where two timing advances (TA) are supported in a single downlink control information (DCI)-based intra-cell multi-transmission/reception point (TRP), the control section 110 may determine the bit size of the PRACH-related indicator field based on a certain condition.

The transmitting/receiving section 120 may transmit certain parameters related to support of two timing advances (TA) in single downlink control information (DCI)-based inter-cell beam management (ICBM). The control section 110 may control generation of the certain parameter for the terminal to determine support of two TAs in the DCI-based ICBM.

The transmitting/receiving section 120 may transmit parameters that enable two timing advances (TA) in single downlink control information (DCI)-based inter-cell beam management (ICBM). The control section 110 may control generation of the parameter for the terminal to determine enabling of two TAs in the DCI-based ICBM. In a case where the two TAs are enabled, the terminal does not need to expect a transmission configuration indication (TCI) state associated with a certain cell to correspond to two timing advance groups (TAG).

The transmitting/receiving section 120 may transmit a parameter that enables two timing advances (TA) in single downlink control information (DCI)-based inter-cell beam management (ICBM) and a physical random access channel (PRACH)-related indicator field in a physical downlink control channel order that triggers a PRACH. The control section 110 may control generation of the parameter for the terminal to determine enabling of two TAs in the DCI-based ICBM. In a case where the two TAs are enabled, the terminal may determine a cell to be triggered of the PRACH based on the PRACH-related indicator field.

### (User Terminal)

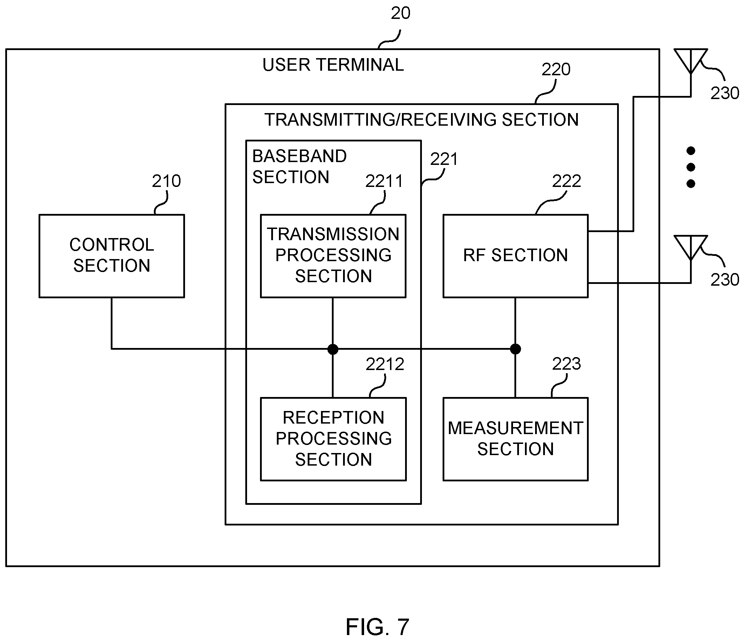

Fig. 7 illustrates an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that the present example mainly describes functional blocks of a characteristic part of the present embodiment, and it may be assumed that the user terminal 20 includes other functional blocks that are necessary for radio communication as well. A part of the processing of each section described below may be omitted.

The control section 210 controls the entire user terminal 20. The control section 210 can include a controller, a control circuit, and the like that are described based on common recognition in the technical field according to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 220 may be configured as an integrated transmitting/receiving section, or may include a transmitting section and a receiving section. The transmitting section may include the transmission processing section 2211 and the RF section 222. The reception section may include the reception processing section 2212, the RF section 222, and the measurement section 223.

The transmitting/receiving antenna 230 can include an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where transform precoding is not enabled, DFT processing does not need to be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

On the other hand, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the measurement section 223 may derive channel measurement for CSI computation, based on a channel measurement resource. The channel measurement resource may be, for example, a non-zero power (NZP) CSI-RS resource. Furthermore, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeable with a zero power (ZP) CSI-RS. Note that, in the present disclosure, CSI-RS, NZP CSI-RS, ZP CSI-RS, CSI-IM, CSI-SSB, and the like may be interchangeable with each other.

Note that the transmitting section and the receiving section of the user terminal 20 in the present disclosure may include at least one of the transmitting/receiving section 220 and the transmitting/receiving antenna 230.

The transmitting/receiving section 220 may receive the PRACH-related indicator field in a physical downlink control channel order that triggers a physical random access channel (PRACH). In a case where two timing advances (TA) are supported in a single downlink control information (DCI)-based intra-cell multi-transmission/reception point (TRP), the control section 210 may determine the bit size of the PRACH-related indicator field based on a certain condition. The certain condition may be that at least one of a parameter indicating a timing advance group, a parameter enabling a plurality of TAs in a certain scenario, and a setting of a path loss offset for the certain scenario is provided. The certain condition may be at least one of receiving a TCI codepoint indicating two transmission configuration indication (TCI) states, having two indicated TCI states, receiving a configuration related to a unified TCI state. In a case where two timing advances (TA) are not supported in the single downlink control information (DCI)-based intra-cell multi-transmission/reception point (TRP), the control section 210 does not need to expect that at least one of a plurality of timing advance groups (TAG), a plurality of downlink (DL) reference timings, and a timing advance offset value is set for the serving cell.

The transmitting/receiving section 220 may receive certain parameters related to support of two timing advances (TA) in single downlink control information (DCI)-based inter-cell beam management (ICBM). The control section 210 may determine support of two TAs in the DCI-based ICBM based on the certain parameter. The certain parameter may be at least one of a parameter that enables support of two TAs in the DCI-based ICBM, a parameter related to setting of a path loss offset for a certain scenario, and a parameter related to an additional cell. In a case where two TAs are supported in the DCI-based ICBM, the control section 210 may expect that at least one of a plurality of timing advance groups (TAG), a plurality of downlink (DL) reference timings, and a timing advance offset value is set for the serving cell. In a case where two TAs are supported in the DCI-based ICBM, the control section 210 does not need to expect that at least one of a plurality of timing advance groups (TAG), a plurality of downlink (DL) reference timings, and a timing advance offset value is set for the serving cell.

The transmitting/receiving section 220 may receive parameters that enable two timing advances (TA) in single downlink control information (DCI)-based inter-cell beam management (ICBM). The control section 210 may determine the enabling of two TAs in the DCI-based ICBM based on the parameters. In a case where the two TAs are enabled, the control section 210 may not expect that the transmission configuration indication (TCI) state associated with a certain cell corresponds to two timing advance groups (TAG). The enabling of the two TAs may be providing two TAGs or two timing advance offset values in a serving cell. The enabling of the two TAs may be providing a correspondence between TAGs and TCI states. The enabling of the two TAs may be providing a parameter related to setting of a path loss offset or a parameter related to an additional cell.

The transmitting/receiving section 220 may receive a parameter that enables two timing advances (TA) in single downlink control information (DCI)-based inter-cell beam management (ICBM) and a physical random access channel (PRACH)-related indicator field in a physical downlink control channel order that triggers a PRACH. The control section 210 may determine the enabling of two TAs in the DCI-based ICBM based on the parameters. In a case where the two TAs are enabled, the control section 210 may determine a cell to be triggered of the PRACH based on the PRACH-related indicator field. The cell to be triggered of the PRACH may be at least one of a serving cell, an active additional cell, and an inactive additional cell. The number of bits of the PRACH-related indicator field may be determined based on the number of additional cells or active additional cells. The codepoints of the PRACH-related indicator field may be mapped according to ascending or descending order of indexes of additional cells.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

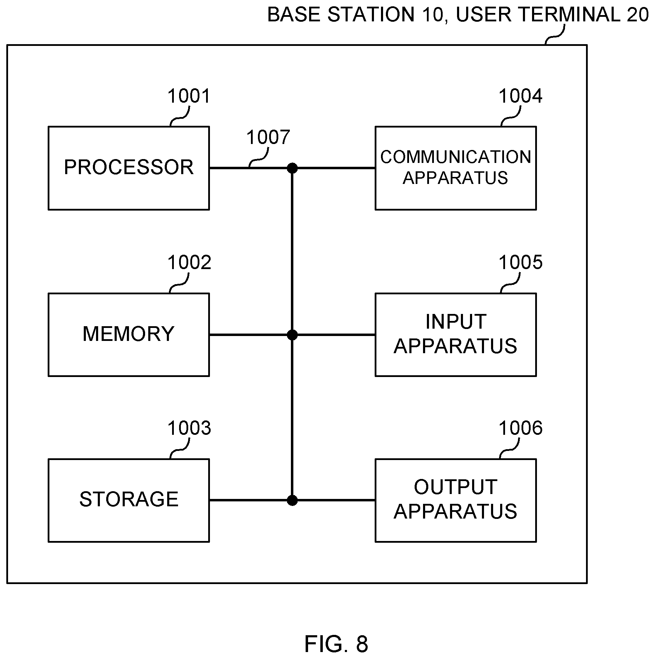

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

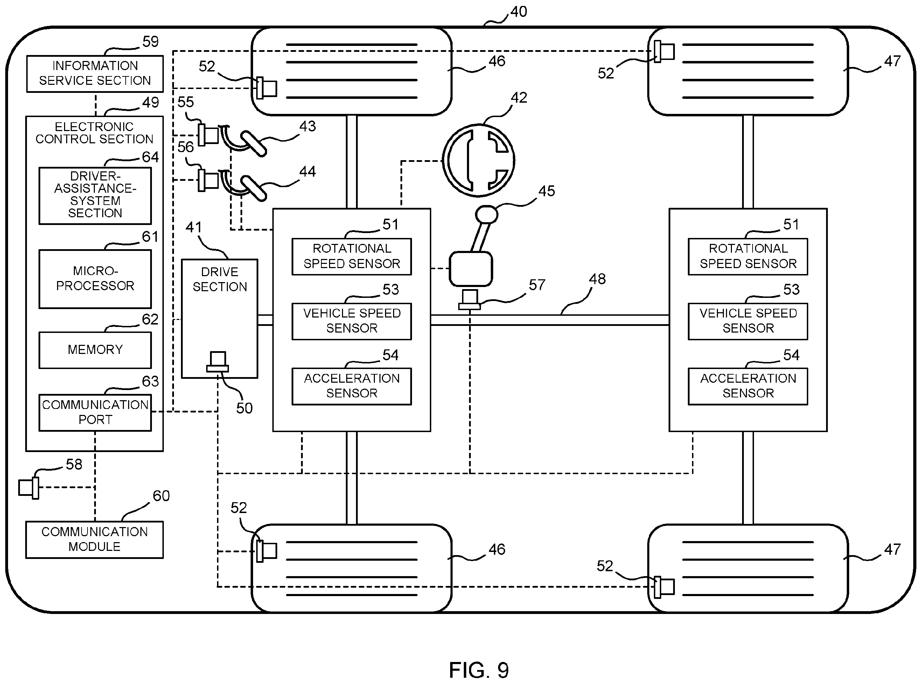

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes:various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes:various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section configured to receive a parameter enabling two timing advances (TA) in single downlink control information (DCI)-based inter-cell beam management (ICBM), and a physical random access channel (PRACH)-related indicator field in a physical downlink control channel order that triggers a PRACH; and
a control section configured to determine enabling of two TAs in the DCI-based ICBM based on the parameter, wherein
the control section determines a cell to be triggered of a PRACH based on the PRACH-related indicator field in a case where the two TAs are enabled.

2. The terminal according to claim 1, wherein the cell to be triggered of the PRACH is at least one of a serving cell, an active additional cell, and an inactive additional cell.

3. The terminal according to claim 1, wherein the number of bits of the PRACH-related indicator field is determined based on the number of additional cells or active additional cells.

4. The terminal according to claim 1, wherein codepoints of the PRACH-related indicator field are mapped according to ascending or descending order of indexes of additional cells.

5. A radio communication method for a terminal, the method comprising:
a step of receiving a parameter enabling two timing advances (TA) in single downlink control information (DCI)-based inter-cell beam management (ICBM) and a physical random access channel (PRACH)-related indicator field in a physical downlink control channel order that triggers a PRACH;
a step of determining enabling of two TAs in the DCI-based ICBM based on the parameter; and
a step of determining a cell to be triggered of the PRACH based on the PRACH-related indicator field in a case where the two TAs are enabled.

6. A base station comprising:
a transmitting section configured to transmit a parameter enabling two timing advances (TA) in single downlink control information (DCI)-based inter-cell beam management (ICBM) and a physical random access channel (PRACH)-related indicator field in a physical downlink control channel order that triggers a PRACH; and
a control section configured to control generation of the parameter for a terminal to determine enabling of two TAs in the DCI-based ICBM, wherein
the terminal determines a cell to be triggered of a PRACH based on the PRACH-related indicator field in a case where the two TAs are enabled.
